# EUROPEAN PATENT APPLICATION

(11) **EP 2 264 662 A1**
(43) Date of publication of application: **22.12.2010**
(21) Application number: 08740297.0
(22) Date of filing: 11.04.2008
(51) Int. Cl.: G06Q 30/00

(54) **ADVERTISEMENT DISPLAY METHOD, ADVERTISEMENT DISPLAY SYSTEM, AND ADVERTISEMENT DISPLAY PROGRAM**

(71) Applicant: Cirius Technologies, Inc., Tokyo 150-0013 (JP)
(72) Inventor: MIYAZAWA, Gen, Tokyo 150-0013 (JP); ANDO, Ren, Tokyo 150-0013 (JP)
(74) Representative: Staudt, Hans-Peter
(86) International application number: PCT/JP2008/057200
(87) International publication number: WO 2009/125495

(57) **Abstract**

[Problems] To provide an advertisement display method, an advertisement display system, and an advertisement display program capable of precisely estimating advertisement information beneficial to a user based on multiple aspects of factors and then displaying the information on a screen of a communication terminal in an easily viewable manner.

[Means of Solving the Problems] This advertisement display method is one for displaying location information of an advertiser and advertisement information of the advertiser on a map displayed on a screen of a communication terminal based on user-specified location information specified by a user of the communication terminal, the advertisement display method comprising the steps of: displaying the location information on a display position on the map in accordance with advertiser-specified location information based on the advertiser-specified location information specified by the advertiser, displaying the advertisement information associated with the advertiser-specified location information on the map in accordance with the location information, generating ranking information of the advertisement information; and changing the display mode of at least one of either the location information or the advertisement information based on the ranking information.

## Description

### TECHNICAL FIELD

The present invention relates to an advertisement display method, an advertisement display system, and an advertisement display program, and particularly to an advertisement display method and the like capable of displaying advertisement information with higher utility value on a communication terminal by means of location information of an advertiser and attribute information of a user.

### BACKGROUND ART

Recently, information communication is implemented utilizing communication networks such as the Internet and the like via communication terminals such as personal computers and cell phones. This information communication allows users of communication terminals to transmit various items of information and obtain various items of information, and is very convenient.

Moreover, various Internet sites that provide various items of information are connected to the Internet network, and various information-providing services are provided to users. For example, various services are provided by sites (search sites) that execute keyword searches based on keywords entered from a communication terminal and display the search results, as well as sites (map-information sites) that display an area map for an address based on an entered address.

There are also sites that can be used more conveniently once a user has registered their private attribute information beforehand. For example, in SNS (Social Networking Service) sites, users register information such as their address, hobbies, and the like beforehand, and the users themselves can thus transmit information on their diary page established in the SNS sites and can exchange information with other users who live in the same area or other users who have the same hobbies. Moreover, in shopping sites, users register information such as their address, payment information, and the like beforehand, and once a product to purchase is selected on a communication terminal, the payment and shipping processes are conducted for that product.

In this way, as the utilization of Internet sites using communication terminals has become more popular, Internet sites have gained attention and have been widely utilized as a new advertisement medium. For example, advertisement display frames are provided on portions of the site pages of the above-mentioned search sites or map-information sites and advertisement information is posted within those frames, and the information is thus viewed by more Internet users and an advertisement effect is achieved.

Recently, higher advertisement effect has been achieved by selectively displaying advertisement information beneficial to users. For example, based on the keywords entered in a search site, advertisement information that is highly associated with the keywords is displayed along with the search results (for examples, refer to Patent Documents 1-5). The keywords entered by a user can be considered to be indicating the user's interests, so if advertisement information associated with the keywords is selectively displayed, the user can be considered to have great interest in that advertisement information.

[Patent Document 1] Japanese Patent Application Publication No. 2003-196509
[Patent Document 2] Japanese Patent Application Publication No. 2003-501729
[Patent Document 3] Japanese Patent Application Publication No. 2005-533327
[Patent Document 4] Japanese Patent Application Publication No. 2005-537591
[Patent Document 5] Japanese Patent Application Publication No. 2006-500699

### DISCLOSURE OF THE INVENTION

### PROBLEMS TO BE SOLVED BY THE INVENTION

However, even if the advertisement information is selected based only on the information of the entered keywords, that advertisement information is not necessarily beneficial to the user. It is necessary to estimate whether it is beneficial to the user based on various factors from multiple aspects.

For example, when a user wants to purchase a product, it is possible to gain the user's interest if advertisement information of a dealer that sells that product is displayed. However, whether or not the advertisement information of that dealer is beneficial to the user is dependent on the distance between the user and the dealer, the popularity (reputation) of the dealer, the business hours of the dealer, and the like.

Moreover, displaying the location and advertisement information of the dealer on the map will be convenient for the user, but if too many items of advertisement information are displayed on the map, map information such as roads, intersections, landmarks, and the like become difficult to see, resulting in the possibility of being an inconvenience. Therefore, it has been difficult to achieve viewability for both advertisement information beneficial to the user and various items of map information within the map.

The present invention has been devised in consideration of the above circumstances, and the exemplary object is to provide an advertisement display method, an advertisement display system, and an advertisement display program capable of precisely estimating advertisement information beneficial to a user based on multiple aspects of factors and then displaying the information on a screen of a communication terminal in an easily viewable manner.

### MEANS OF SOLVING THE PROBLEMS

In order to solve the above problems, the advertisement display method according to an exemplary aspect of the present invention is an advertisement display method for displaying location information of an advertiser and advertisement information of the advertiser on a map displayed on a screen of a communication terminal based on user-specified location information specified by the user of the communication terminal, the advertisement display method including the steps of displaying the location information on a display position on the map in accordance with advertiser-specified location information based on the advertiser-specified location information specified by the advertiser, displaying the advertisement information associated with the advertiser-specified location information on the map in accordance with the location information, generating ranking information of the advertisement information, and changing the display mode of at least one of either the location information or the advertisement information based on the ranking information.

The location information and the advertisement information of the advertiser are displayed on the map, so it is easy and convenient for the user to recognize the location of the advertiser. The location information corresponds to the advertisement information, so it is easy to ascertain which advertiser is located at which position and providing which item of advertisement information. Moreover, ranking is performed for each item of advertisement information, and based on this ranking, at least one of either the location information or advertisement information is changed, thus allowing the user to easily ascertain how beneficial the advertisement information is for the user through the display mode. In addition, by changing the display mode according to the ranking, it becomes possible to both display beneficial advertisement information with high viewability while also displaying the map information with high viewability at the same time.

The communication terminals include a wide variety of terminal devices capable of information communication (information transmission and reception), and typically include personal computers, personal digital assistants, cell phones, and the like. The user-specified location information is location information specified by the user and includes, for example, location information of the user positioned by GPS. The location information may be address information or may be latitude/longitude information.

The user-specified location information may be, for example, information entered into the communication terminal by the user as part of query information (e.g., information indicating the name of a place or area, such as "Roppongi", information indicating landmarks such as "Roppongi Station", "Roppongi Station Post Office", and the like, or information indicating roads and intersections, such as "Intersection at Shinjuku 3-chome", etc.), or may be address information of the user or part of such information. The address information of the user may be entered into the communication terminal by the user as query information, or may be stored in an Internet server such as a shopping server as attribute information.

The advertiser-specified location information is location information specified by the advertiser, and is typically location information indicating the location of the advertiser (e.g., place of business, store, etc.), but it is not limited to such a location and may be other location information specified by the advertiser. This advertiser-specified location information may be address information that has already been registered into a database by the advertiser, or, alternatively, address information within the company information stored in the advertiser's server may be used as the advertiser-specified location information. Of course, it may be location information of the advertiser that was positioned in the past or that is positioned in real time by GPS.

The step of generating the ranking information may include the step of generating the ranking information based on at least any one of location difference information between the user-specified location information and the advertiser-specified location information, the advertisement fee for each item of advertisement information, evaluation information indicating an evaluation of the advertisement information, attribute information of the user, specified-time information indicating the time specified by the user, and query information entered into the communication terminal by the user.

The ranking information of the advertisement information is generated based on multiple aspects of factors, so it is possible to determine which advertisement information is beneficial to the user from multiple aspects and to precisely place a high ranking on beneficial advertisement information. The term "beneficial" as used herein means being capable of gaining the user's interest, having utility value for the user, and exerting a high advertisement effect.

The location difference information between the user-specified location information and the advertiser-specified location information is, for example, distance information between the position specified by the user and the position specified by the advertiser. The evaluation information is information indicating an evaluation (popularity, reputation, and the like) of the advertisement information and includes, for example, evaluation point information in which a user who has purchased a product related to the advertisement information on a shopping site evaluates the product or the advertiser. The evaluation information also includes a click rate regarding the advertisement information. This click rate is expected-value information indicating how much of an advertisement effect the advertisement information exerts if that advertisement information is displayed. For example, it is a ratio between the number of displays of the advertisement information including link information to the advertiser's site and the number of displays of the advertiser's site caused by selecting (clicking on) that link information.

The attribute information of the user is, for example, private information such as the user's address, occupation, hobbies, and the like. The query information is request information that is entered into the communication terminal by the user to request some sort of arithmetic processing and is typically search keyword information.

By generating the ranking information based on the location difference information, it is possible to place a high rank on the advertisement information of an advertiser near the user's location. By generating the ranking information based on the advertisement fee, it is possible to place a high rank on the advertisement information of an advertiser who has set a higher advertisement fee. By generating the ranking information based on the evaluation information, it is possible to place a high rank on the advertisement information of an advertiser with a good reputation. By generating the ranking information based on the user's attribute information, it is possible to place a high rank on advertisement information that reflects the details of that information, such as the user's occupation and hobbies. By generating the ranking information based on the specified-time information, for example, it is possible to place a high rank on the advertisement information of an advertiser who is open during the specified time and place a low rank on the advertisement information of an advertiser who is closed at the specified time. By generating the ranking information based on the query information, it is possible to place a high rank on advertisement information that reflects the contents of the keywords entered by the user. Moreover, by using all or some of these factors in combination to generate the ranking information, it is possible to place a high rank on advertisement information that is most suitable for the user according to a determination based on multiple aspects in a complex manner.

The step of changing the display mode may include a step of changing at least one of either the display size of the location information or the display size of the advertisement information based on the ranking information.

By changing at least one of either the display size of the location information or the display size of the advertisement information based on the ranking information, it becomes possible to both display the location information or advertisement information with high viewability and display the map information with high viewability at the same time. For example, if all of the items of advertisement information of the advertisers displayed are enlarged, the map information will be almost unviewable. On the other hand, if all of the items of information displayed are small, the viewability of the map information will be increased but the advertisement information will be difficult to view, thus deteriorating the benefit for the user.

Here, it is possible to ensure high benefit for the user while ensuring the high viewability of the map information by making the advertisement information and the location information corresponding to advertisement information with a high rank displayed large while making the advertisement information and the location information corresponding to advertisement information with a low rank displayed small.

The step of changing the display mode may include the step of switching the displaying/hiding status of the advertisement information based on the ranking information.

By switching the displaying/hiding status of the advertisement information based on the ranking information, it becomes possible to both display the location information or advertisement information with high viewability and display the map information with high viewability at the same time. For example, if all of the items of advertisement information of the advertiser located within the map are displayed, the map information will be almost unviewable. On the other hand, if the items of advertisement information with a high rank are hidden, the benefit for the user will be deteriorated.

Here, it is possible to ensure high benefit for the user while ensuring the high viewability of the map information by displaying the advertisement information and the location information corresponding to advertisement information with a high rank while hiding the advertisement information and the location information corresponding to advertisement information with a low rank.

For example, the advertisement information having ranking information with a rank equal to or higher than the display criteria is configured to be displayed, and the advertisement information having ranking information with a rank lower than the display criteria is configured to be hidden, and a sliding bar by which the display criteria can be adjusted is displayed adjacent to the map. By adjusting the position of the slider on the sliding bar, it is possible the adjust the number of items of advertisement information to be displayed on the map, making it possible to both display the beneficial advertisement information with high viewability and display the map information with high viewability at the same time.

It is more convenient if the adjustment with the slider is configured to be achievable based on specified time information or based on evaluation information. The criteria can be conveniently changed so that, e.g., only items of advertisement information with very high evaluations are displayed, or many items of advertisement information with a moderate or higher evaluation are displayed. Moreover, by changing the adjustment with the slider to be adjustable based on the specified time information, the criteria can be conveniently changed so that, e.g., only the advertisement information of advertisers who are open until 10 p.m. or later is displayed, or many of the items of advertisement information of advertisers who are open until 6 p.m. or later are displayed.

The advertisement display method may further include the step of associating the advertisement information with the advertiser's website.

Because the advertisement information is associated with the advertiser's website, the information within the advertiser's website can be automatically posted or updated for the advertisement information. Therefore, without bothering to create the advertisement information, for example, images within the advertiser's web site can be automatically displayed as the advertisement information. Moreover, when the information within the advertiser's website has been updated, the information to be displayed as the advertisement information can be updated in conjunction with such updates, and as a result, up-to-date information can always be displayed as the advertisement information.

The advertisement display system according to another exemplary aspect of the present invention is an advertisement display system for displaying location information of an advertiser and advertisement information of the advertiser on a map displayed on a screen of a communication terminal based on user-specified location information specified by the user of the communication terminal, the advertisement display system including a location-information display part for displaying the location information on a display position on the map in accordance with advertiser-specified location information based on an advertiser database composed by associating the advertiser-specified location information specified by the advertiser with the advertisement information, an advertisement-information display part for displaying the advertisement information on the map while associating it with the location information, a ranking-information generating part for generating ranking information of the advertisement information, and a display-mode changing part for changing the display mode of at least one of either the location information or the advertisement information based on the ranking information.

The location information and the advertisement information of the advertiser are displayed on the map, making it easy and convenient for the user to recognize the location of the advertiser. The location information corresponds with the advertisement information, making it easy to ascertain which advertiser is located at which position and providing which advertisement information. Moreover, ranking is performed for each item of advertisement information, and based on this ranking, at least one of either the location information or advertisement information is changed so that the user can easily ascertain how beneficial the advertisement information is for the user based on the display mode. Additionally, by changing the display mode according to the ranking, it becomes possible to both display beneficial advertisement information with high viewability and display the map information with high viewability at the same time.

The advertisement display program according to yet another exemplary aspect of the present invention is an advertisement display program for displaying location information of an advertiser and advertisement information of the advertiser on a map displayed on a screen of a communication terminal based on user-specified location information specified by the user of the communication terminal, the advertisement display program causing a computer to function as a location-information display part for displaying the location information on a display position on the map in accordance with advertiser-specified location information based on an advertiser database composed by associating the advertiser-specified location information specified by the advertiser with the advertisement information, an advertisement-information display part for displaying the advertisement information on the map while associating it with the location information, a ranking-information generating part for generating ranking information of the advertisement information, and a display-mode changing part for changing the display mode of at least one of either the location information or the advertisement information based on the ranking information.

The location information and the advertisement information of the advertiser are displayed on the map, making it easy and convenient for the user to recognize the location of the advertiser. The location information corresponds with the advertisement information, making it easy to ascertain which advertiser is located at which position and providing which advertisement information. Moreover, ranking is performed for each item of advertisement information, and based on this ranking, at least one of either the location information or advertisement information is changed so that the user can easily ascertain how beneficial the advertisement information is for the user based on the display mode. Additionally, by changing the display mode according to the ranking, it becomes possible to both display beneficial advertisement information with high viewability and display the map information with high viewability at the same time.

The advertisement display method according to yet another exemplary aspect of the present invention is an advertisement display method for displaying advertisement information of an advertiser on a screen of a communication terminal based on user-specified location information specified by a user of the communication terminal, wherein the advertisement information is composed with including common advertisement information and a plurality of items of separate advertisement information, and the plurality of items of separate advertisement information is respectively associated with a plurality of items of advertiser-specified location information specified by the advertiser, the advertisement display method including the steps of extracting separate advertisement information from among the plurality of items of advertisement information based on location difference information between the user-specified location information and the advertiser-specified location information, and displaying the extracted separate advertisement information and the common advertisement information on the screen.

Because the common advertisement information and the items of separate advertisement information are displayed on the screen of the communication terminal, if, for example, the common advertisement information is configured to be displayed in a portion of the advertisement frame within the screen and the items of separate advertisement information are configured to be displayed in another portion, it is possible to display different types of advertisement information in a single advertisement frame at the same time. Effective utilization of the advertisement frame is thus achievable, and more information can be provided to the user at one time. For example, it is possible to display information on products handled by the advertiser as the common advertisement information while displaying the contact information of one business location from among a plurality of business locations of the advertiser as the separate advertisement information.

Since the separate advertisement information to be displayed is extracted from plurality of items of separate advertisement information based on the location difference information, it is possible, for example, to extract the contact information of the business location near the user's location from a plurality of business locations. Therefore, the user can obtain the product information and the contact information of the business locations that handle the product in the advertisement frame.

The advertisement display system according to yet another exemplary aspect of the present invention is an advertisement display system for displaying advertisement information of an advertiser on a screen of a communication terminal based on user-specified location information specified by a user of the communication terminal, wherein the advertisement information is composed with including common advertisement information and a plurality of items of separate advertisement information, and the plurality of items of separate advertisement information is respectively associated with a plurality of items of advertiser-specified location information specified by the advertiser, the advertisement display system including a separate-advertisement-information extraction part for extracting separate advertisement information from among the plurality of items of separate advertisement information based on location difference information between the user-specified location information and the advertiser-specified location information, and an advertisement-information display part for displaying the extracted separate advertisement information and the common advertisement information on the screen.

Because the common advertisement information and the items of separate advertisement information are displayed on the screen of the communication terminal, if, for example, the common advertisement information is configured to be displayed in a portion of the advertisement frame within the screen and the items of separate advertisement information are configured to be displayed in another portion, it is possible to display different types of advertisement information in a single advertisement frame at the same time. Effective utilization of the advertisement frame is thus achievable, and more information can be provided to the user at one time. For example, it is possible to display information on products handled by the advertiser as the common advertisement information while displaying the contact information of one business location from among a plurality of business locations of the advertiser as the separate advertisement information.

Because the separate advertisement information to be displayed is extracted from a plurality of items of separate advertisement information based on the location difference information, it is possible, for example, to extract the contact information of the business location near the user's location from among a plurality of business locations. Therefore, the user can obtain the product information and the contact information of the business locations that handle the product in the advertisement frame.

Further problems and other characteristics of the present invention will now be described based on preferred embodiments described with reference to the attached drawings below.

### EFFECTS OF THE INVENTION

According to the present invention, it is possible to precisely estimate advertisement information beneficial to the user based on multiple aspects of factors and then display the information on a screen of a communication terminal. Moreover, both the viewability of the advertisement information and location information and the viewability of the map information within the map can be ensured at a high level when displaying that advertisement information and location information of the advertiser on the map.

### DETAILED DESCRIPTION OF THE INVENTION

### [Embodiment 1]

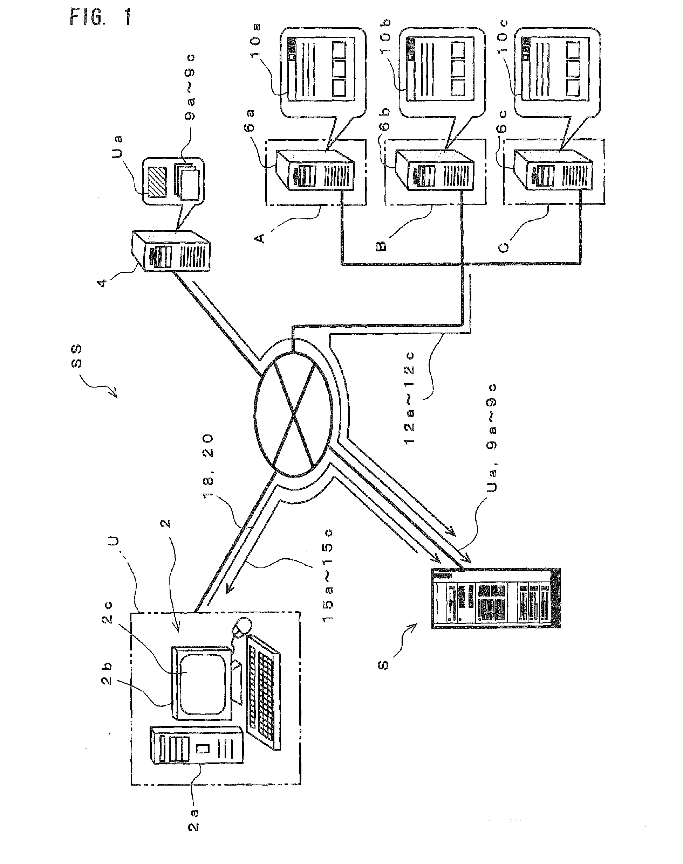

An advertisement-information provision system SS for achieving the advertisement display method according to Embodiment 1 of the present invention will be described below with reference to the drawings. Fig. 1 is a schematic block diagram illustrating an overview of the general configuration of this advertisement-information provision system SS. This advertisement-information provision system SS is generally configured to have a user's computer (hereinafter referred to as "user PC") 2 as a communication terminal, a shopping server 4, advertiser's servers 6a-6c, and an advertisement display server (advertisement display system, computer) S. Each of these computers is connected to each other via the Internet W.

Meanwhile, the phrases "viewing a site" and "viewing a site page" are to be considered to have the same meaning. Moreover, the phrases "connection to a site" and "connection to a site server" are to be considered to have the same meaning, and the phrases "access to a site" and "access to a site server" are to be considered to have the same meaning.

The user PC 2 is a communication terminal that is connected to the Internet W and enabled for sending and receiving information with each server. The user PC 2 has, as shown in the figure, a device body 2a, a display device 2b, a keyboard, and a mouse, and a web browser is provided within the device body 2a. Additionally, the information provided from the server connected via the Internet W is displayed on a screen 2c of the display device 2b. Moreover, it is possible to enter information or select information using the keyboard and the mouse, and the input information or selected information is sent to each server via the Internet W.

In this Embodiment 1, although the user PC 2 used by a user U is described as an example of a communication terminal, the communication terminal may be of course a personal digital assistant or a cell phone. The communication terminal may be any terminal device capable of information communication via an information communication network such as the Internet W, regardless of whether it is wired or wireless.

The shopping server 4 is a server computer that provides a merchandise purchasing service using the Internet W. Advertisers A-C, which will be described later, maintain a presence in this shopping server 4. As a result, the user U can view products sold by each of the advertisers A-C and purchase those products by accessing the shopping server 4 via the Internet W.

Because the user U has registered their personal information beforehand, attribute information Ua such as the user U's address, occupation, and hobbies is stored in the shopping server 4. Moreover, evaluation information 9a-9c of each of the advertisers A-C has also been stored in the shopping server 4. These items of evaluation information 9a-9c are evaluation points respectively assigned to each of the advertisers A-C by other users who have previously purchased a product from the advertisers A-C and are based on judgments on aspects such as excellence in service and excellence in product quality, and these constitute information indicating the popularity of each of the advertisers A-C. For example, in this Embodiment 1, based on a maximum score of 10 points, the evaluation information of the advertiser A is 9 points, the evaluation information of the advertiser B is 7 points, and the evaluation information of the advertiser C is 3 points.

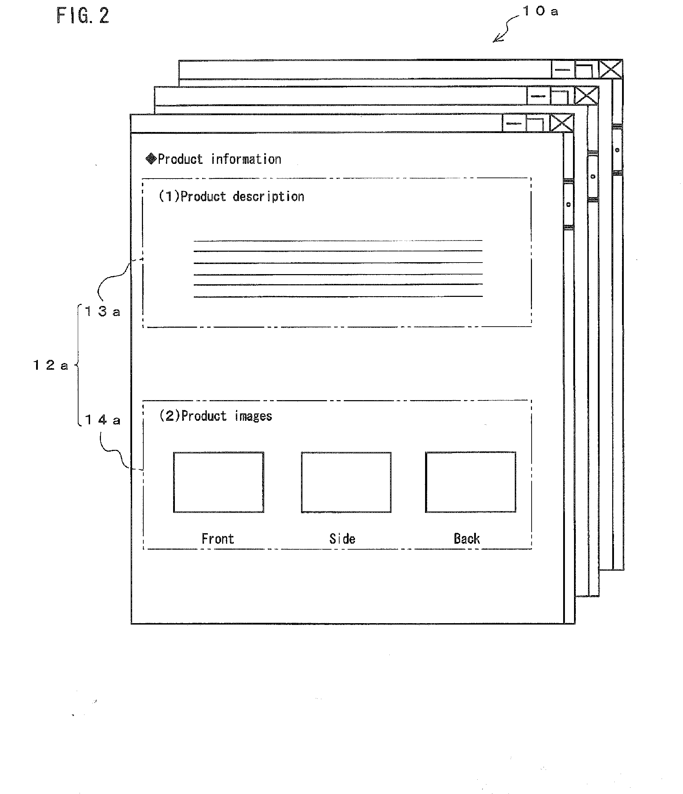

The advertiser's servers 6a-6c are housed in server computers administered and managed by the respective advertisers A-C. These advertisers A-C are agents engaged in the business of selling their products, providing their services, and the like and are typically privately owned stores, sales companies, and the like. Hereinafter, the advertiser's server 6a administered and managed by the advertiser A will be described with reference to Fig. 2.

Fig. 2 is a schematic block diagram of a page 10a of the advertiser's site established within the advertiser's server 6a. Within this site page 10a, product descriptions 13a and product images 14a are posted as product information 12a of the products sold by the advertiser A. When the user U accesses the advertiser's server 6a using the user PC 2, this product information 12a is displayed on the screen 2c so that the user U can know the product details.

If the products sold by the advertiser A are changed, the product information 12a posted to the site page 10a is updated to the information related to new products. Therefore, the product descriptions 13a and the product images 14a will be updated accordingly. Similarly, also within the advertiser's servers 6b and 6c administered and managed by the advertisers B and C, the site pages 10b and 10c have been established, respectively, and the product information 12b and 12c of the products sold by the advertisers B and C, respectively, have been posted to their site pages 10b and 10c.

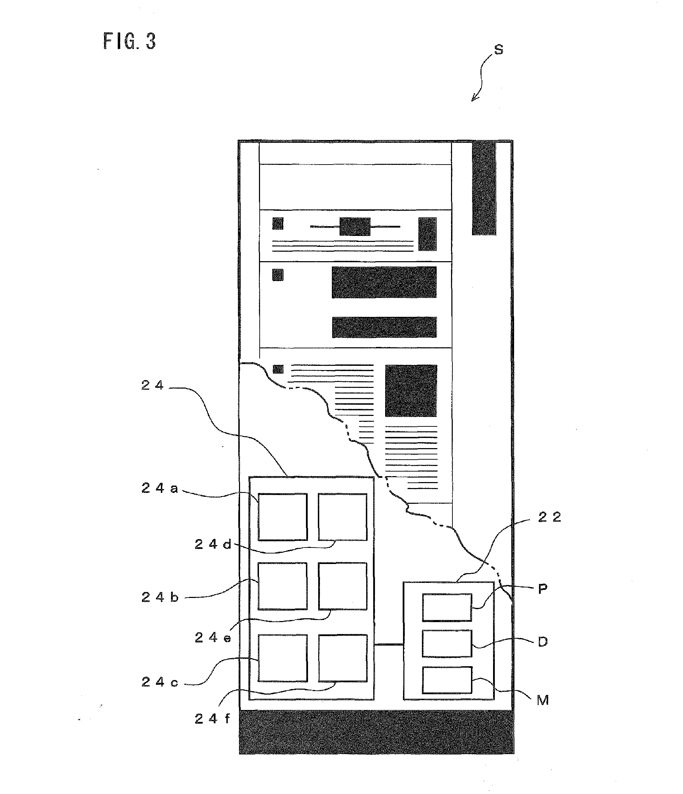

The advertisement display server S is a server computer connected to the Internet W for displaying the advertisement information 15a-15c of the advertisers A-C on the screen 2c of the user PC 2. Fig. 3 is a schematic block diagram illustrating an overview of the internal configuration of the advertisement display server S. This advertisement display server S has a storage device 22 and a CPU 24 acting as the main component of the computer.

The storage device 22 is a data storage means such as a hard disk unit and houses an advertisement display program P, an advertiser database D, and a map database M. The advertisement display program P is a program for causing the CPU 24 to function as a search-screen display part 24a, a map-information display part 24b, a location-information display part 24c, an advertisement-information display part 24d, a ranking-information generating part 24e, and a display-mode changing part 24f, as described in detail later.

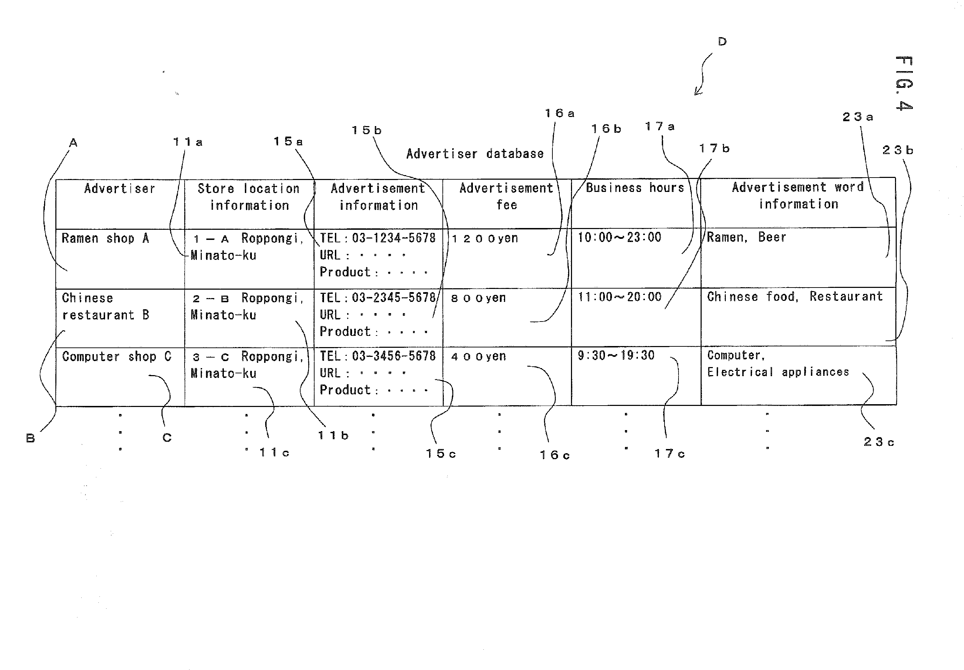

Fig. 4 is a data structure diagram of the advertiser database D. The advertiser database D is composed by mutually associating each item of information of the advertisers A-C, store-location information (advertiser-specified location information) 11a-11c, advertisement information 15a-15c, advertisement fees 16a-16c, business hours 17a-17c, and advertisement word information 23a-23c. Each of these items of information is information that is provided beforehand by the advertisers A-C to the advertising agent acting as the administrator and manager of this advertisement display server S based on the arrangement between the advertising agent and each of the advertisers A-C. Meanwhile, for the purpose of ease of description, only the case of the advertiser A will be described below, but the same description may be applied to the advertisers B and C.

The store-location information 11a is location information specified by the advertiser A. In this Embodiment 1, as an example, the store-location information 11a is described as indicating the location of the store of the advertiser A as the advertiser-specified location information, but the information is not limited to the location and may be any local information specified by the advertiser A. Moreover, the location information may be any information indicating a specific position on the map, and may be, for example, address information or GPS information (latitude/longitude information).

The advertisement information 15a is information desired by the advertiser A to be provided to the user U, and is, for example, information on the products sold by the advertiser A, the contact information of the advertiser A (address, phone number, URL of the advertiser's site, etc.), and the like. In this Embodiment 1, this advertisement information 15a is associated with the product information 12a posted within the site page 10a of the advertiser's server 6a. Therefore, the product information 12a within the site page 10a is to be provided to the user U as part of the advertisement information 15a.

The advertisement fee 16a is monetary information prearranged by the advertiser A and the advertising agent. As described later, when generating the ranking information of the advertisement information, this advertisement fee 16a also has an effect. That is, when the advertisement fee is high, the ranking information for that advertisement information tends to be generated with a high rank, and when the advertisement fee is low, the ranking information for that advertisement information tends to be generated with a low rank. Therefore, an advertiser who wants the advertisement information to be displayed with a high rank needs to set the advertisement fee to a higher amount in the arrangement with the advertising agent.

The business hours 17a is information indicating a period of time when the store of the advertiser A can provide its commodity sales services. For example, in this Embodiment 1, the business hours 17a of the store of the advertiser A is 10:00-23:00. As described later, when generating the ranking information of the advertisement information, the specified time information specified by the user U also has an effect. That is, when the specified time is within the business hours of the store, the ranking information for the advertisement information related to that store tends to be generated with a high rank, and when the specified time is outside of the business hours of the store, the ranking information for the advertisement information related to that store tends to be generated with a low rank.

The advertisement word information 23a is word information predetermined by the advertiser A and is word information highly associated with the contents of the advertisement information 15a, that is, the product information 12a of the products sold by the advertiser A. When keywords 20, which will be described later, are entered into the user PC 2, the association between these keywords 20 and the advertisement word information 23a affects the generation of the ranking information of the advertisement information 15a. For example, when the entered keyword 20 is "ramen", and if the advertisement word information 23a also is also "ramen", both words are matched and the ranking information of the advertisement information 15a tends to be generated with a high rank. If the advertisement word information 23b is "Chinese restaurant", both words are not matched but refer to related concepts, so the ranking information of the advertisement information 15a tends to be generated with a moderate rank, and if the advertisement words information 23a is "computer", both words refer to unrelated concepts and the ranking information tends to be generated with a low rank.

The map database M includes and is composed of, for example, the map information for the entirety of Japan. When the user U enters the user-specified location information 18 into the user PC 2, based on the user-specified location information 18, nearby map information is sent from the map database M to the user PC 2, and the nearby map is displayed on the screen 2c of the user PC 2.

This user-specified location information 18 may be information as part of the keywords 20 entered by the user U (place-name information, area information, landmark information, address information, and the like). Moreover, part of the attribute information Ua stored in the shopping server 4 (for example, address information of the user U) may be used as the user-specified location information 18. Location information estimated or judged based on the action history information, such as the user U's past search history, as well as history information, such as cookies held in the user PC 2, may also be used as the user-specified location information 18.

In particular, when the communication terminal 18 is a personal digital assistant or a cell phone, for example, the positioning information (GPS information) obtained through GPS may be used as the user-specified location information 18.

In this Embodiment 1, an example where the map database M is housed in the advertisement display server S is described, but of course, the map database M may be configured to be housed in a map provision server (not shown) other than the advertisement display server S, and the advertisement display server S may be configured to acquire the map information from the map provision server when the user-specified location information 18 is sent to the advertisement display server S.

Next, each function that is exerted by the CPU 24 of the advertisement display server S according to instructions from the advertisement display program P will be described.

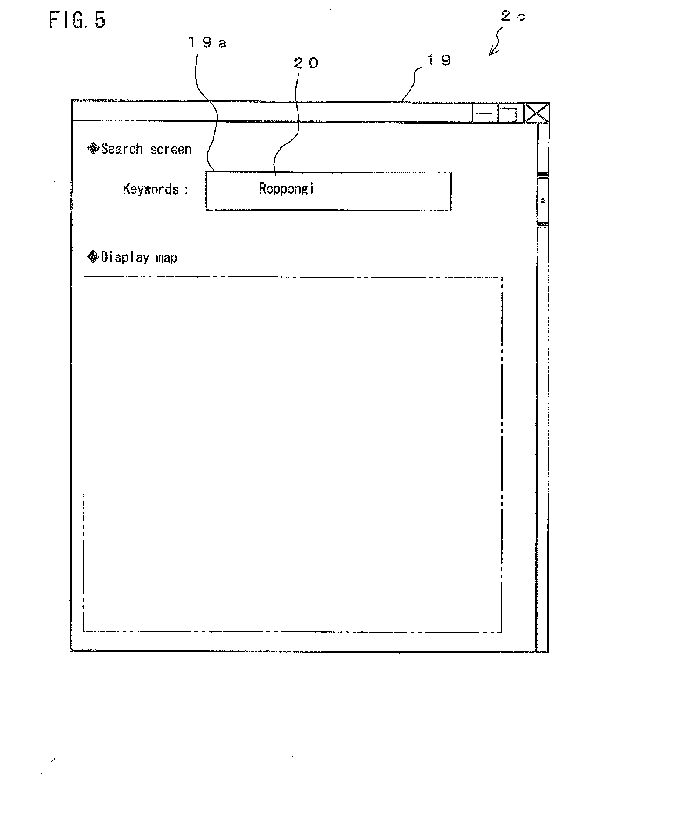

The search-screen display part 24a has a function to display a search screen 19 as shown in Fig. 5 on the screen 2c of the user PC 2 when the advertisement display server S is accessed by the user PC 2. This search screen 19 is provided with a keyword entry field 19a so that, by entering a keyword (query information) 20 in this keyword entry field 19a, the keyword 20 is sent to the advertisement display server S.

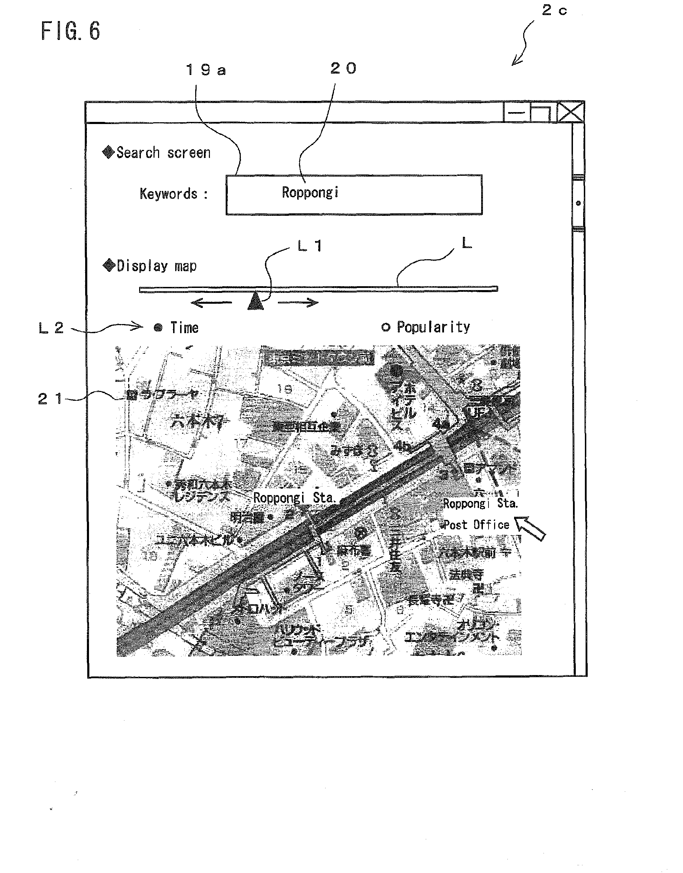

The map-information display part 24b has a function to display a map 21 on the screen 2c of the user PC 2 based on the map database M. The map 21 covering the specified range around the user-specified location information 18 is displayed on the screen 2c of the user PC2. For example, when the word "Roppongi", which is place-name information (address information), is entered in the keyword entry field 19a as a keyword 20, "Roppongi" is also used as the user-specified location information 18 and the map 21 covering the specified range around Roppongi station is displayed on the screen 2c as shown in Fig. 6.

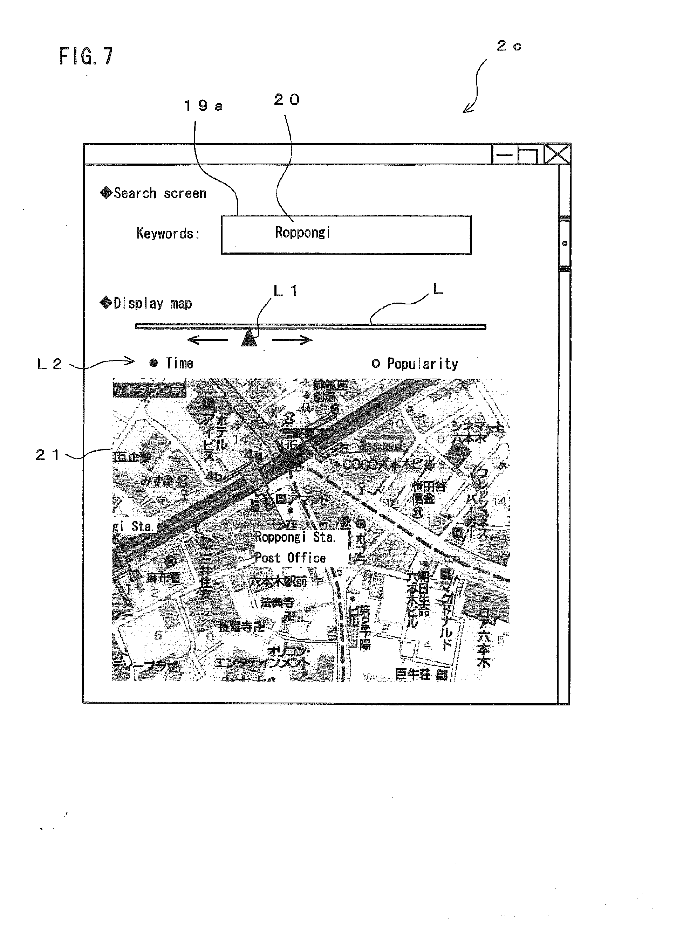

Moreover, while the map 21 covering the specified range around Roppongi station is displayed, when the Roppongi Station Post Office, which is displayed at a position slightly off the center, is clicked on using a mouse, the location information of the Roppongi Post Office is sent to the advertisement display server S as the user-specified location information 18, and in turn, the map 21 covering the specified range around the Roppongi Post Office is displayed on the screen 2c (see Fig. 7).

Thus, the place-name information or address information entered as the keyword 20, or the location information that is clicked on by a mouse on a map, or the like is sent to the advertisement display server S as the user-specified location information 18, and based on that user-specified location information 18, the map information is sent from the map database M to the user PC 2, and then the map 21 covering the specified range around the position indicated by the user-specified location information 18 is displayed on the screen 2c.

The map information display part 24b has a function to also display a sliding bar L adjacent to the map 21. By adjusting the position of a slider L1 on this sliding bar L through a mouse operation, the display mode of the advertisement information 15a-15c on the map 21 can be changed and the details will be described later.

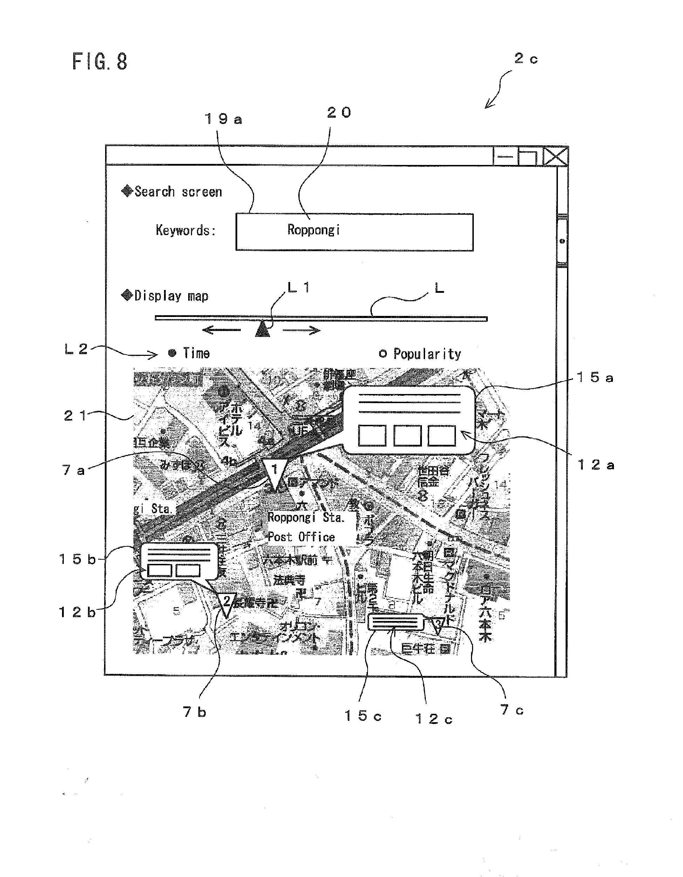

The location information display part 24c has a function to display the location information 7a-7c of stores on the map 21 of the screen 2c based on the store-location information 11a-11c. These items of location information 7a-7c are displayed on the display position in accordance with the store-location information 11a-11c as described in Fig. 8. In this Embodiment 1, the location information 7a-7c is displayed in a display mode where "a number is provided in a triangle". This number may indicate, for example, the respective ranking information of each item of advertisement information 15a-15c. Moreover, the location information 7a corresponding to the advertisement information 15a with a high rank of ranking information is displayed with a large triangle, and the location information 7c corresponding to the advertisement information 15c with a low rank of ranking information is displayed with a small triangle.

The advertisement-information display part 24d has a function to display the advertisement information 15a-15c on the map 21 in accordance with the location information 7a-7c. In this Embodiment 1, the advertisement information 15a-15c is displayed with a balloon adjacent to the location information 7a-7c. Moreover, the advertisement information 15a with a high rank of ranking information is displayed with a large balloon, and the advertisement information 15c with a low rank of ranking information is displayed with a small balloon.

The ranking-information generating part 24e has a function to generate the ranking information for each item of the advertisement information 15a-15c. This ranking information is generated based on all of the differences between the user-specified location information 18 and the store-location information 11a-11c (location difference information), advertisement fee 16a-16c for each of the advertisement information 15a-15c, evaluation information 9a-9c for each of the advertisement information 15a-15c, attribute information Ua of the user U, specified time information specified by the user U, and the entered keyword 20, and ranking is done for each of the advertisement information 15a-15c.

Specifically, when the distance between the user-specified location information 18 and the store-location information is close (i.e., the location of the store is near the center position of the map 21), the ranking information of its advertisement information tends to be generated with a high rank. On the other hand, when the location of the store is distant from the center position of the map 21, the ranking information of its advertisement information tends to be displayed with a low rank.

Moreover, the ranking information of the advertisement information with a high advertisement fee tends to be generated with a high rank, and the ranking information of the advertisement information with a low advertisement fee tends to be generated with a low rank. The ranking information of the advertisement information with a high score in the evaluation information (i.e., high popularity) tends to be generated with a high rank, and the ranking information of the advertisement information with a low score in the evaluation information tends to be generated with a low rank.

The evaluation information 9a-9c for each of the advertisement information 15a-15c may be acquired from within the shopping server 4 by the ranking-information generation part 24e. Moreover, when each of the advertisement information 15a-15c is configured to be associated with the respective click-rate information in the advertiser database D, this click-rate information may be used as the ranking information for each of the advertisement information 15a-15c.

The click-rate information is expected-value information that indicates how much of an advertisement effect the advertisement information exerts if that advertisement information is displayed and also indicates the popularity of each item of advertisement information. For example, the click-rate information would be the ratio between the number N of displays of the advertisement information in the past, including link information to the advertiser's site, and the number n of displays of the advertiser's site upon selecting (clicking on) that link information (n/N).

Moreover, the ranking information of the advertisement information highly associated with the attribute information Ua of the user U tends to be generated with a high rank, and the ranking information of the advertisement information less associated with the attribute information Ua tends to be generated with a low rank. This attribute information Ua may be acquired from within the shopping server 4 by the ranking-information generating part 24e. For example, if the attribute information Ua contains the information "My favorite food is ramen", the ranking information of advertisement information that contains "ramen" in the advertisement word information tends to be generated with a high rank. Additionally, for example, if the attribute information Ua contains the information "My hobby is computers", the ranking information of advertisement information that contains "computer" in the advertisement word information tends to be generated with a high rank.

The ranking information of the advertisement information where the specified time information specified by the user U is included in the business hours tends to be generated with a high rank, and the ranking information of the advertisement information where the specified time information is not included in the business hours tends to be generated with a low rank. Moreover, if the entered keyword 20 is highly associated with the advertisement word information, the ranking information of the advertisement information corresponding to that advertisement word information tends to be generated with a high rank, and if the keyword 20 is less associated with the advertisement word information, the ranking information of the advertisement information corresponding to that advertisement word information tends to be generated with a low rank.

As described above, ranking is performed and the ranking information is generated by the ranking-information generating part 24e for each item of advertisement information based on the distance from the center position of the map 21, the advertisement fee, the evaluation information, the click-rate information, the attribute information of the user, the specified time information, and keywords. Each item of ranking information is then associated with the respective item of advertisement information 15a-15c. Based on this ranking information, the display mode of the advertisement information 15a-15c and the location information 7a-7c is changed by the display-mode changing part 24f.

The display-mode changing part 24f has a function to change the display mode of the location information 7a-7c and the advertisement information 15a-15c on the map 21 according to the ranking information. For example, if the ranking information of the advertisement information 15a has the highest rank and the ranking information of the advertisement information 15c has the lowest rank, the display-mode changing part 24f displays the location information 7a and the advertisement information 15a in the largest scale and the location information 7c and the advertisement information 15c in the smallest scale.

Of course, the change in the display mode is not limited to the change in the display size. For example, it is possible to change the thickness of characters or the color of characters and symbols, and it is also possible to change the decorative icons that are additionally displayed. Of course, the display mode of the location information 7a-7c is not limited to the display mode where "a number is provided in a triangle" and may include circular shapes, rectangular shapes, pin-shapes, and the like. The position of the number provided may be inside or outside of the figure, or the number may not even be provided. The color of the location information 7a-7c may be changed according to the ranking information.

Meanwhile, the sliding bar L, slider L1 and criteria selection part L2 placed adjacent to the map 21 also function as a part of the display-mode changing part 24f. The sliding bar L, slider L1, and criteria selection part L2 are placed adjacent to the map 21 on the screen 2c. The criteria selection part L2 is for selecting the criteria for adjustment by the slider, and in this Embodiment 1, it is possible to select "time" or "popularity".

Now, when "time" is selected, for example, the sliding bar L functions as a specified-time-information adjusting part, and the specified time information can be set by adjusting the slider L1. Then, with the specified time information set by the slider L1 as a criterion, the location information and advertisement information of advertisers whose business hours include the specified time are displayed, and the location information and advertisement information of advertisers whose business hours do not include the specified time are hidden. Thus, adjustment by moving the slider L1 right and left allows the location information and advertisement information on the map 21 to be displayed or hidden.

On the other hand, when "popularity" is selected by the criteria selection part L2, the sliding bar L functions as an evaluation-information adjusting part, and the evaluation information criteria can be set by adjusting the slider L1. Then, the location information and advertisement information of advertisers who have evaluation information equal to or greater than the evaluation information criteria set by the slider L1 are displayed, and the location information and advertisement information of advertisers who have evaluation information lower than the evaluation information criteria are hidden. Thus, adjustment by moving the slider L1 right and left allows the location information and advertisement information on the map 21 to be displayed or hidden.

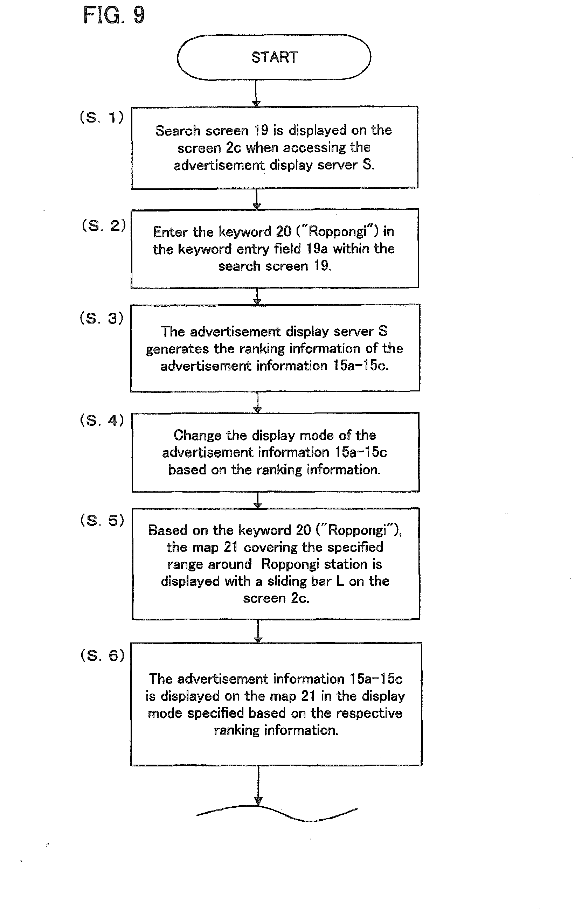

Next, the operational process of the advertisement display server S according to Embodiment 1 will be described using the flow chart shown in Fig. 9.

When the user U accesses the advertisement display server S via the user PC 2, a search screen 19 is displayed on the screen 2c (S. 1). When the user U enters a keyword 20 ("Roppongi") in the keyword entry field 19a of the search screen 19 (S. 2), the advertisement display server S generates the ranking information of the advertisement information 15a-15c based on the entered keyword 20, the attribute information Ua within the shopping server4, the evaluation information 9a-9c, and the advertiser database D (S. 3). Then, the display mode of the advertisement information 15a-15c is changed based on that ranking information (S. 4).

Based on the entered keyword 20 ("Roppongi"), the map 21 covering a specified range around Roppongi station and the sliding bar L are displayed on the screen 2c (S. 5). At the same time, the advertisement information 15a-15c is displayed on the map 21 in a display mode set based on the respective items of ranking information (S. 6).

### [Embodiment 2]

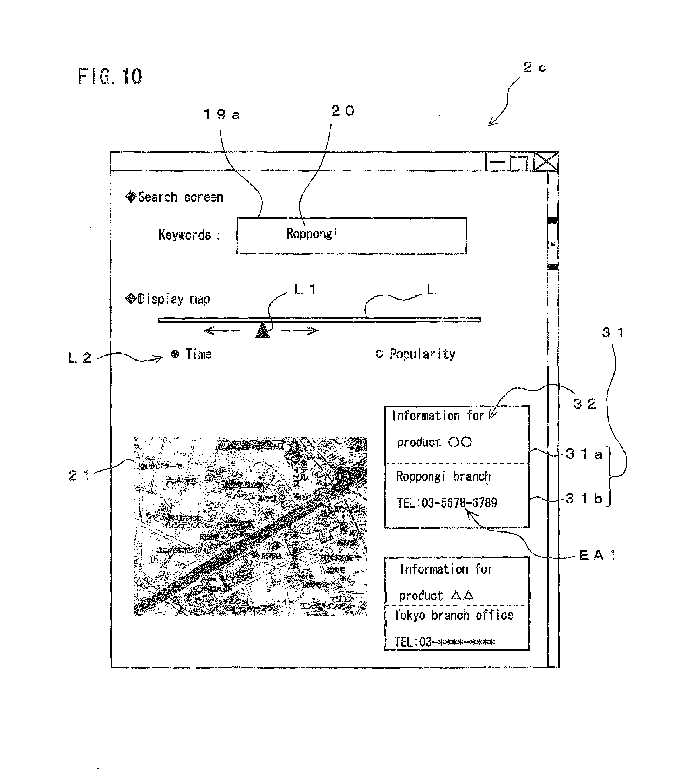

Fig. 10 is an example of a screen displayed on the screen 2c of the user PC 2 through the advertisement display method according to Embodiment 2 of the present invention. For configurations identical to those of Embodiment 1, identical references are used and redundant descriptions are omitted.

In this Embodiment 2, when a keyword 20 ("Roppongi") is entered on the search screen 19, the keyword 20 is used as the user-specified location information 18, the map 21 around Roppongi station is displayed on the screen 2c based on that keyword 20, and an advertisement frame 31 is displayed adjacent to the map 21. This advertisement frame 31 is divided into an upper frame 31a and a lower frame 31b, and common advertisement information 32 of the advertiser E (see Fig. 2) is displayed in the upper frame 31a.

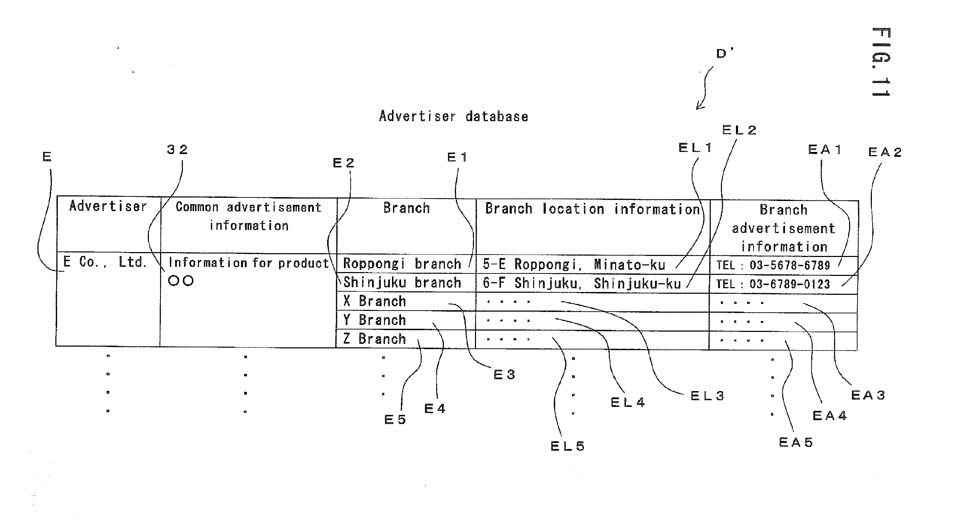

Fig. 11 shows the data structure of the advertiser database D stored in the storage device 22 of the advertisement display server S. The advertiser database D is composed by mutually associating the advertiser E, common advertisement information 32, branches E1-E5, branch-location information (advertiser-specified location information) EL1-EL5, and branch advertisement information (separate advertisement information) EA1-EA5.

The common advertisement information 32 is advertisement information that the advertiser E wants to post regardless of the area covered by the map 21 displayed on the screen 2c, and is, for example, information on the products sold by the advertiser E and the like. Moreover, the branches E1-E5 are the hubs deployed by the advertiser E at various places, and the branch-location information EL1-EL5 is the location information of the respective branches E1-E5. The branch-advertisement information EA1-EA5 is advertisement information desired to be posted for each of the branches E1-E5, and is, for example, contact information such as the phone number, address and the like for each of the branches E1-E5.

The advertisement display server S extracts the branch or its branch-advertisement information with the smallest location difference information (i.e., the nearest distance) between the user-specified location information 18 and the branch-location information based on the received user-specified location information 18 (i.e., keyword 20 ("Roppongi")) and the advertiser database D. For example, in this Embodiment 2, if the branch E1 is the Roppongi branch, the branch-advertisement information EA1 of the Roppongi branch E1 is extracted based on the keyword 20.

The common advertisement information 32 and the branch-advertisement information EA1 are then sent to the user PC 2, and the common advertisement information 32 is displayed in the upper frame 31a and the branch-advertisement information EA1 is displayed in the lower frame 31b. Of course, if the user U has moved the center position of the map 21 to set Shinjuku station to the center position, the location information of Shinjuku station is sent to the advertisement display server S as the user-specified location information 18, and the branch-advertisement information EA2 of the Shinjuku branch E2 is newly displayed in the lower frame 31b. In this case, the common advertisement information 32 remains displayed in the upper frame 31a.

### [Embodiment 3]

Fig. 12 is a data structure diagram of the advertiser database D1 and the dictionary database D2 used in the advertisement display method according to Embodiment 3 of the present invention. The overview of the advertisement display method in this Embodiment 3 is generally the same as that for Embodiment 1, and redundant descriptions are omitted.

In this Embodiment 3, the advertiser database D1 is composed by associating the advertisement-category information J1-J3 with the advertisement information 15a-15c, respectively, in place of the advertisement word information 23a-23c in the advertisement database D (see Fig. 4) according to Embodiment 1. Additionally, the dictionary database D2 is composed by associating a plurality of items of advertisement-category information J (J1-J3) with a plurality of items of derivative-words information K (K1-K5), respectively.

Due to the operation of the advertisement display program P, the server advertiser database D1 and the dictionary database D2 cooperate with each other to associate the derivative-words information K1-K5 with the advertisement-category information J1 of the advertiser15a. Then, based on the association between the keyword 20 entered by the user U and the derivative-words information K (K1-K5), the ranking information of the advertisement information 15a is generated.

The advertiser A does not need to specify a number of items of advertisement word information 23a in the arrangement with an advertising agent. By specifying only one item of advertisement information J1, a number of items of derivative-words information K1-K5 is associated with the advertisement information 15a. Therefore, complications over the course of arrangement can be eliminated, and the registration of the advertisement information (registration to the advertiser database D1) can be achieved through an easy registration process. Moreover, association between the advertisement information and a number of items of derivative-words information can be achieved.

Meanwhile, this dictionary database D2 may be housed in a storage device 22 of the advertisement display server S beforehand. Moreover, the contents may be updated each time the keyword 20 is sent from the user U to the advertisement display server S. For example, because a plurality of keywords simultaneously entered by the user U can be judged to be highly associated with each other, if the plurality of keywords is updated and registered as a plurality of derivative words associated with the same advertisement-category information, the contents of the dictionary database can be successfully complemented and the contents can be kept fresh.

Preferred embodiments of the present invention have been described above, but the present invention is not limited to these embodiments and it is possible to make various modifications and changes within the scope of the invention.

### BRIEF DESCRIPTION OF THE DRAWINGS

Fig. 1 is a schematic block diagram illustrating the general configuration of the advertisement-information provision system for achieving the advertisement display method according to Embodiment 1 according to the present invention.
Fig. 2 is a schematic block diagram of a site page of an advertiser's site established within the advertiser's server shown in Fig. 1.
Fig. 3 is a schematic block diagram illustrating an overview of the internal configuration of the advertisement display server shown in Fig. 1.
Fig. 4 is a data structure diagram of the advertiser database housed in the storage device shown in Fig. 3.
Fig. 5 is an example of the screen display of the search screen displayed on the screen of the user PC shown in Fig. 1.
Fig. 6 is an example of the screen display of the map displayed on the screen of the user PC as shown in Fig. 1, where the map covering a specified range around Roppongi station is displayed.
Fig. 7 is an example of the screen display of the map displayed on the screen of the user PC as shown in Fig. 1, where the map covering a specified range around the Roppongi Post Office is displayed.
Fig. 8 is an example of the screen display illustrating a situation where the location information and the advertisement information of the advertiser are displayed on the map shown in Fig. 6.
Fig. 9 is a flowchart illustrating the operational process of the advertisement display server according to Embodiment 1 of the present invention.
Fig. 10 is an example of the screen displayed on the screen of the user PC through the advertisement display method according to Embodiment 2 of the present invention.
Fig. 11 is a data structure diagram of the advertiser database housed in the storage device of the advertisement display server according to Embodiment 2 of the present invention.

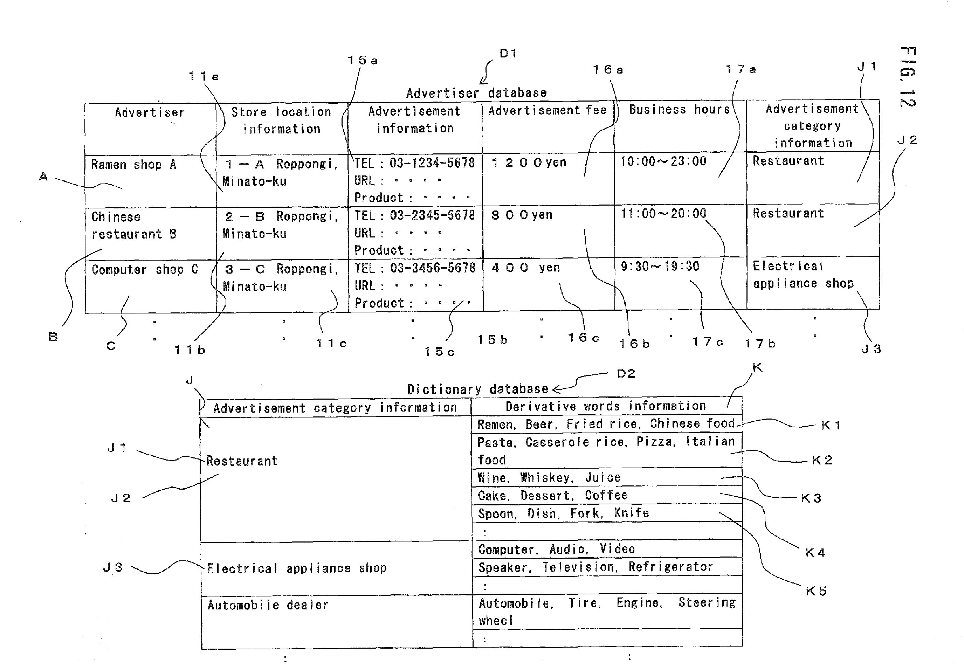

Fig. 12 is a data structure diagram of the advertiser database and the dictionary database used in the advertisement display method according to Embodiment 3 of the present invention.

### DESCRIPTION OF THE SYMBOLS

- A-C, E:: Advertiser
- D, D', D1:: Advertiser database
- D2:: Dictionary database
- E1-E5: Branch
- EA1-EA5:: Branch-advertisement information (separate advertisement information)
- EL1-EL5:: Branch-location information (advertiser-specified location information)
- J1-J3:: Advertisement-category information
- K1-K5:: Derivative-words information
- L:: Sliding bar
- L1:: Slider
- L2:: Criteria selection part
- M:: Map database
- P:: Advertisement display program
- S:: Advertisement display server (advertisement display system, computer)
- SS:: Advertisement-information provision system
- U:: User
- Ua:: Attribute information
- W:: Internet
- 2:: User PC (user's computer, communication terminal)
- 2a:: Device body
- 2b:: Display device
- 2c:: Screen
- 4:: Shopping server
- 6a-6c:: Advertiser's server
- 7a-7c:: Location information
- 9a-9c:: Evaluation information
- 10a-10c:: Site page
- 11a-11c:: Store-location information (advertiser-specified location information)
- 12a-12c:: Product information
- 13a:: Product description
- 14a:: Product image
- 15a-15c:: Advertisement information
- 16a-16c:: Advertisement fee
- 17a-17c:: Business hours
- 18:: User-specified location information
- 19:: Search screen
- 19a:: Keyword entry field
- 21:: Map
- 20:: Keywords (query information)
- 22:: Storage device
- 23a-23c:: Advertisement word information
- 24:: CPU (main component of a computer)
- 24a:: Search-screen display part
- 24b:: Map-information display part
- 24c:: Location-information display part
- 24d:: Advertisement-information display part
- 24e:: Ranking-information generating part
- 24f:: Display-mode changing part
- 31:: Advertisement frame
- 31a:: Upper frame
- 31b:: Lower frame
- 32:: Common advertisement information

## Claims

1. An advertisement display method for displaying location information of an advertiser and advertisement information of said advertiser on a map displayed on a screen of a communication terminal based on user-specified location information specified by a user of said communication terminal, the advertisement display method comprising the steps of:
displaying said location information on a display position on said map in accordance with advertiser-specified location information based on said advertiser-specified location information specified by said advertiser,
displaying said advertisement information associated with said advertiser-specified location information on said map in accordance with said location information,
generating ranking information of said advertisement information; and,
changing the display mode of at least one of either said location information or said advertisement information based on said ranking information.

2. The advertisement display method according to Claim 1, wherein said step of generating the ranking information comprises the step of
generating said ranking information based on at least any one of location difference information between said user-specified location information and said advertiser-specified location information, the advertisement fee for each said advertisement information, evaluation information indicating an evaluation of said advertisement information, attribute information of said user, specified-time information indicating the time specified by said user, and query information entered into said communication terminal by said user.

3. The advertisement display method according to Claim 1, wherein said step of changing the display mode comprises the step of
changing at least one of either the display size of said location information or the display size of said advertisement information based on said ranking information.

4. The advertisement display method according to Claim 1, wherein said step of changing the display mode comprises the step of
switching the displaying/hiding status of the advertisement information based on said ranking information.

5. The advertisement display method according to Claim 1, further comprising the step of associating said advertisement information with said advertiser's web site.

6. An advertisement display system for displaying location information of an advertiser and advertisement information of said advertiser on a map displayed on a screen of a communication terminal based on user-specified location information specified by the user of said communication terminal, the advertisement display system comprising:
a location-information display part for displaying said location information on a display position on said map in accordance with advertiser-specified location information based on an advertiser database composed by associating advertiser-specified location information specified by said advertiser with said advertisement information,
an advertisement-information display part for displaying said advertisement information on said map while associating it with said location information,
a ranking-information generating part for generating ranking information of said advertisement information; and,
a display-mode changing part for changing the display mode of at least one of either said location information or said advertisement information based on said ranking information.

7. An advertisement display program for displaying location information of an advertiser and advertisement information of said advertiser on a map displayed on a screen of a communication terminal based on user-specified location information specified by the user of said communication terminal, the advertisement display program causing
a computer to function as:
a location-information display part for displaying said location information on the display position on said map in accordance with advertiser-specified location information based on an advertiser database composed by associating advertiser-specified location information specified by said advertiser with said advertisement information,
an advertisement-information display part for displaying said advertisement information on said map while associating it with said location information,
a ranking-information generating part for generating ranking information of said advertisement information; and,
a display-mode changing part for changing the display mode of at least one of either said location information or said advertisement information based on said ranking information.

8. An advertisement display method for displaying advertisement information of an advertiser on a screen of a communication terminal based on user-specified location information specified by a user of said communication terminal, wherein:
said advertisement information is composed with comprising common advertisement information and a plurality of items of separate advertisement information, and,
said plurality of items of separate advertisement information is respectively associated with a plurality of items of advertiser-specified location information specified by said advertiser, the advertisement display method comprising the steps of:
extracting separate advertisement information from among said plurality of items of separate advertisement information based on location difference information between said user-specified location information and said advertiser-specified location information; and,
displaying said extracted separate advertisement information and said common advertisement information on said screen.

9. An advertisement display system for displaying advertisement information of an advertiser on a screen of a communication terminal based on user-specified location information specified by a user of said communication terminal, wherein:
said advertisement information is composed with comprising common advertisement information and a plurality of items of separate advertisement information, and,
said plurality of items of separate advertisement information is respectively associated with a plurality of items of advertiser-specified location information specified by said advertiser, the advertisement display system comprising:
a separate-advertisement-information extraction part for extracting separate advertisement information from among said plurality of items of separate advertisement information based on location difference information between said user-specified location information and said advertiser-specified location information; and,
an advertisement-information display part for displaying said extracted separate advertisement information and said common advertisement information on said screen.

## Amended claims

### Amended claims under Art. 19.1 PCT

1. (amended) An advertisement display method for displaying location information of an advertiser and advertisement information of said advertiser on a map displayed on a screen of a communication terminal based on user-specified location information specified by a user of said communication terminal, the advertisement display method comprising the steps of:
displaying said location information on a display position on said map in accordance with advertiser-specified location information based on said advertiser-specified location information specified by said advertiser,
displaying said advertisement information associated with said advertiser-specified location information on said map in accordance with said location information,
generating ranking information of said advertisement information; and,
changing the display mode of at least one of either said location information or said advertisement information based on display criteria adjusted by said user and said ranking information.

2. (amended) The advertisement display method according to Claim 1, wherein said step of generating the ranking information comprises the step of
generating said ranking information based on at least one of evaluation information indicating an evaluation of said advertisement information or attribute information of said user.

3. The advertisement display method according to Claim 1, wherein said step of changing the display mode comprises the step of
changing at least one of either the display size of said location information or the display size of said advertisement information based on said ranking information.

4. The advertisement display method according to Claim 1, wherein said step of changing the display mode comprises the step of
switching the displaying/hiding status of the advertisement information based on said ranking information.

5. The advertisement display method according to Claim 1, further comprising the step of associating said advertisement information with said advertiser's web site.

6. (amended) An advertisement display system for displaying location information of an advertiser and advertisement information of said advertiser on a map displayed on a screen of a communication terminal based on user-specified location information specified by the user of said communication terminal, the advertisement display system comprising:
a location-information display part for displaying said location information on a display position on said map in accordance with advertiser-specified location information based on an advertiser database composed by associating advertiser-specified location information specified by said advertiser with said advertisement information,
an advertisement-information display part for displaying said advertisement information on said map while associating it with said location information,
a ranking-information generating part for generating ranking information of said advertisement information; and, a display-mode changing part for changing the display mode of at least one of either said location information or said advertisement information based on display criteria adjusted by said user and said ranking information.

7. (amended) An advertisement display program for displaying location information of an advertiser and advertisement information of said advertiser on a map displayed on a screen of a communication terminal based on user-specified location information specified by the user of said communication terminal, the advertisement display program causing
a computer to function as:
a location-information display part for displaying said location information on the display position on said map in accordance with advertiser-specified location information based on an advertiser database composed by associating advertiser-specified location information specified by said advertiser with said advertisement information,
an advertisement-information display part for displaying said advertisement information on said map while associating
it with said location information,
a ranking-information generating part for generating ranking information of said advertisement information; and,
a display-mode changing part for changing the display mode of at least one of either said location information or said advertisement information based on display criteria adjusted by said user and said ranking information.

8. An advertisement display method for displaying advertisement information of an advertiser on a screen of a communication terminal based on user-specified location information specified by a user of said communication terminal, wherein:
said advertisement information is composed with comprising common advertisement information and a plurality of items of separate advertisement information, and,
said plurality of items of separate advertisement information is respectively associated with a plurality of items of advertiser-specified location information specified by said advertiser, the advertisement display method comprising the steps of:
extracting separate advertisement information from among said plurality of items of separate advertisement information based on location difference information between said user-specified location information and said advertiser-specified location information; and,
displaying said extracted separate advertisement information and said common advertisement information on said screen.

9. An advertisement display system for displaying advertisement information of an advertiser on a screen of a
communication terminal based on user-specified location information specified by a user of said communication terminal, wherein:
said advertisement information is composed with comprising common advertisement information and a plurality of items of separate advertisement information,
said plurality of items of separate advertisement information is respectively associated with a plurality of items of advertiser-specified location information specified by said advertiser, the advertisement display system comprising:
a separate-advertisement-information extraction part for extracting separate advertisement information from among said plurality of items of separate advertisement information based on location difference information between said user-specified location information and said advertiser-specified location information; and,
an advertisement-information display part for displaying said extracted items of separate advertisement information and said common advertisement information on said screen.
